# EUROPEAN PATENT APPLICATION

(11) **EP 2 787 685 A1**
(43) Date of publication of application: **08.10.2014**
(21) Application number: 13162558.4
(22) Date of filing: 05.04.2013
(51) Int. Cl.: H04L 12/24

(54) **Network management system and a method therefor**

(71) Applicant: Siemens Aktiengesellschaft, 80333 München (DE)
(72) Inventor: Raman, Karthik, 560076 Bangalore (IN); Kota, Venkata Suresh, 560076 Bangalore (IN); Shanbhag, Sanjay, 560070 Bangalore (IN); Hiremath, Santhosh, 560100 Bangalore Karnataka (IN)

(57) **Abstract**

A network management system (200) and a method therefor are disclosed. The device network (100) includes at least one managing device (102) and a set of managed devices (104). The network management system (200) includes a data management module (202), a communication module (204), a discovery module (206), and a monitoring module (208). The data management module (202) is configured for configuring a device management profile including at least a set of device discovery attributes and a set of device monitoring attributes. Each of the device discovery attributes is assigned a priority value. The device management profile comprises at least one discovery criterion. The communication module (204) is configured for retrieving one or more assigned attribute values corresponding to one or more of the device discovery attributes from at least one managed device (104). The discovery module (206) is configured for assigning one of the device management profiles to at least one managed device (104). The monitoring module (208) is configured for assigning a predefined device status to at least one of the managed devices (104) and/or triggering an alarm in the managing device (102).

## Description

The present invention relates to network management and more particularly, to a network management system and a method therefor for managing a device network.

Network management systems are commonly implemented for discovering, configuring, monitoring and controlling network devices coupled to a device network. In a typical network management system, at least one management station (managing device) is configured to communicate and manage multiple network devices (managed device), such as switches, routers, microwave radios, printers, workstations, programmable logic controllers, communication processors, and so on. Each network device is provided with an agent module that locally monitors and stores operational and event data related to the network device. The management station includes a management module which requests operational and event data and/or receives unsolicited notifications from the agent module using standard communication protocols.

With regard to discovery of the network devices, several different protocols such as Simple Network Management Protocol (SNMP), Discovery and Configuration Protocol (DCP), Internet Control Message Protocol (ICMP), Address Resolution Protocol (ARP) and so on. Among these, SNMP is a widely used network management protocol owing to great flexibility in defining and communicating desired device attributes such as device type, model, firmware, and so on.

When a network device is connected to the device network, as a part of device discovery process, initially, the network device should be detected and subsequently, the network device should be identified as one of the known network devices such as 'SCALANCE X204 IRT' and so on. Evidently, accurate discovery of a network device necessitates availability of information related to relevant device attribute values such as device type, model, firmware details, number of ports, and so on.

In accordance with current state of the art, it is a persistent challenge to obtain the required device attribute values and uniquely identify various network devices during discovery process.

Typically, each device network, such as those found in an industrial plant, has a wide range of devices of varying categories and more importantly, from several different vendors. Moreover, every device vendor has numerous device types in a given device family.

It is desirable that a network management system is able to first accurately identify a network device during the discovery process; and subsequently, effectively monitors relevant device attribute values. It will be readily understood that the device attributes that need to be monitored will vary depending on the device type. The discovery process has a direct consequence on an ability of the network management system to accurately monitor the device network.

According to the solutions known from the state of the art, information related to several possible device types is hard-coded in a network management system such that the network management system determines specific device attributes for each new network device and based on such determination identifies a device type either as one of the 'known' device types or classifies the network device as a default network device in case no suitable match from the 'known' devices is found.

As will be apparent, the network management systems known in the art are required to store information related to all possible devices independent of the device vendor in order to accurately discover a network device. Evidently, this expectation is unrealistic. Moreover, with new device types continually being added to the pool of possible network devices, even a most comprehensive repository of known network devices becomes quite obsolete very quickly.

Whenever there is a requirement to accurately discover and monitor a network device not supported by the network management system, the network management system vendor is expected to supply hot-fixes to the user of the network management system. In view of a multi-vendor scenario and an ever-growing range and type of devices from each vendor, such arrangement is quite ineffective and unsatisfactory both for the users and the vendor.

Moreover, various network management systems known from the state of the art also have several drawbacks in terms of effective monitoring of the network devices.

The ultimate goal of a network management system is to monitor the devices effectively based on the role assigned to them independent of number of devices, device types, vendor of the device. To achieve this goal, various network management systems implement a hard-coded solutions in which the network parameters are monitored based on the best know-how to monitor the devices available at design time.

Such approach in the state of the art network management systems poses several challenges.

In any industrial network, there will be several hundreds and sometimes, even thousands of network devices. Although these network devices are configured for different roles, the state of the art network management systems monitor these network devices in a generic way assuming certain device attributes are supported by all networks devices. As a consequence, in many cases, several network devices are regularly polled for device attributes that may not even supported by those network devices. Evidently, such regular polling unnecessarily increases network traffic. Furthermore, several network devices may maintain one or more device attributes pertaining to their specific role in the device. Such device attributes, if monitored through the network management system, may provide such information that may be quite useful in efficiently managing the device network. However, owing to hard-coded configuration, the network management systems known from the prior art are incapable of retrieving such desired information from various network devices. In addition, devices status and various threshold conditions for alarm generation are predefined and as such, the network management systems lack any flexibility in that regard.

In light of the foregoing, it is evident that there is a need for a system and a method for effectively managing a device network.

It is therefore an object of the present invention to provide system and a method for managing a device network such that one or more network devices therein are accurately discovered and effectively monitored.

The object is achieved by providing a method for managing a device network according to claim 1, and a network management system according to claim 11. Further embodiments of the present invention are addressed in the dependent claims.

In a first aspect of the present invention, a method for managing a device network is disclosed. The device network comprises a plurality of managed devices and at least one managing device. In accordance with the method of the present invention, initially, at least one device management profile is defined. Each device management profile comprises a set of device discovery attributes. Each of the device discovery attributes is assigned a priority value. Each device management profile further comprises at least one discovery criterion. The discovery criterion comprises at least one logical pair of one of the device discovery attributes and a corresponding expected attribute value.

Subsequently, one or more assigned attribute values corresponding to one or more of the device discovery attributes are retrieved from at least one managed device. Thereafter, a matching index corresponding to at least one of the device discovery attributes is determined based on matching between one or more of the assigned attribute values retrieved from the at least one managed device and the expected attribute values in the discovery criterion.

Finally, one of the device management profiles is assigned to the at least one managed device based on the priority values and/or the matching index corresponding to one or more the device discovery attributes corresponding to the discovery criterion therein.

In a second aspect of the present invention, a network management system for managing a device network is provided. The device network comprises a plurality of managed devices and at least one managing device. The network management system of the present invention comprises a data management module, a communication module, and a discovery module. The data management module is configured for defining at least one device management profile. Each device management profile defining at least a set of device discovery attributes. Each of the device discovery attributes is assigned a priority value. The device management profile further comprises at least one discovery criterion. The discovery criterion comprises at least one logical pair of one of the device discovery attributes and a corresponding expected attribute value. The communication module is configured for retrieving one or more assigned attribute values corresponding to one or more of the device discovery attributes from at least one managed device. The discovery module comprises a matching module and an assigning module. The matching module is configured for determining a matching index corresponding to at least one of the device discovery attributes based on matching between one or more of the assigned attribute values retrieved from the at least one managed device and the expected attribute values in the discovery criterion. The assigning module is configured for assigning one of the device management profiles to the at least one managed device based on the priority values and/or the matching index corresponding to one or more of the device discovery attributes corresponding to the discovery criterion therein.

Accordingly, the present invention provides a system and a method for effectively managing one or more managed devices in a device network. The system and method of the present invention are particularly advantageous in managing a heterogeneous network including a mix of multiple device types from diverse vendors.

According to techniques of the present invention, the network management system is configurable with respect to discovery and monitoring related behaviour thereof.

A user of the network management system of the present invention is enabled to define discovery-related device attributes and related processing logic. The user is therefore relieved from dependence on receiving upgrades from a vendor of the network management system in order to accurately discover various network devices. Furthermore, the user is advantageously enabled to customize various monitoring-related device attributes and corresponding thresholds and alerts. Further, the user is enabled to define device status based on various monitoring-related parameters as desired. Thus, the network management system and method according to the present invention is highly customizable as per specific requirements in individual device network implementations.

The present invention is further described hereinafter with reference to illustrated embodiments shown in the accompanying drawings, in which:
- FIG 1: illustrates a schematic view of a device network in accordance with an embodiment of the present invention,
- FIG 2: illustrates a block diagram of a network management system in accordance with an embodiment of the present invention,
- FIG 3: illustrates a set of device discovery attributes along with corresponding priority values in a tabular format in accordance with an exemplary embodiment of the present invention,
- FIG 4: illustrates a set of device discovery attributes along with corresponding expected attribute values in a tabular format in accordance with an exemplary embodiment of the present invention,
- FIG 5: illustrates an exemplary configuration user-interface for configuring basic device description in accordance with an exemplary embodiment of the present invention,
- FIG 6: illustrates an exemplary configuration user-interface for configuring a discovery criterion for discovering a managed device in a device network in accordance with an exemplary embodiment of the present invention,
- FIG 7: illustrates an exemplary configuration user-interface for configuring a discovery criterion in accordance with an exemplary embodiment of the present invention,
- FIG 8: illustrates an exemplary configuration user-interface for configuring a set of device monitoring attributes in accordance with an exemplary embodiment of the present invention,
- FIG 9: illustrates an exemplary configuration user-interface for adding a device monitoring attribute in the network management system in accordance with an exemplary embodiment of the present invention,
- FIG 10: illustrates an exemplary configuration user-interface for configuring desired attribute values in the network management system in accordance with an exemplary embodiment of the present invention,
- FIG 11: illustrates an exemplary configuration user-interface for configuring desired attribute values in the network management system in accordance with an exemplary embodiment of the present invention,
- FIG 12: illustrates a flow chart for a method for discovering a managed device in a device network in accordance with an exemplary embodiment of the present invention, and
- FIG 13: illustrates a flow chart for a method for monitoring a managed device in a device network in accordance with an exemplary embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

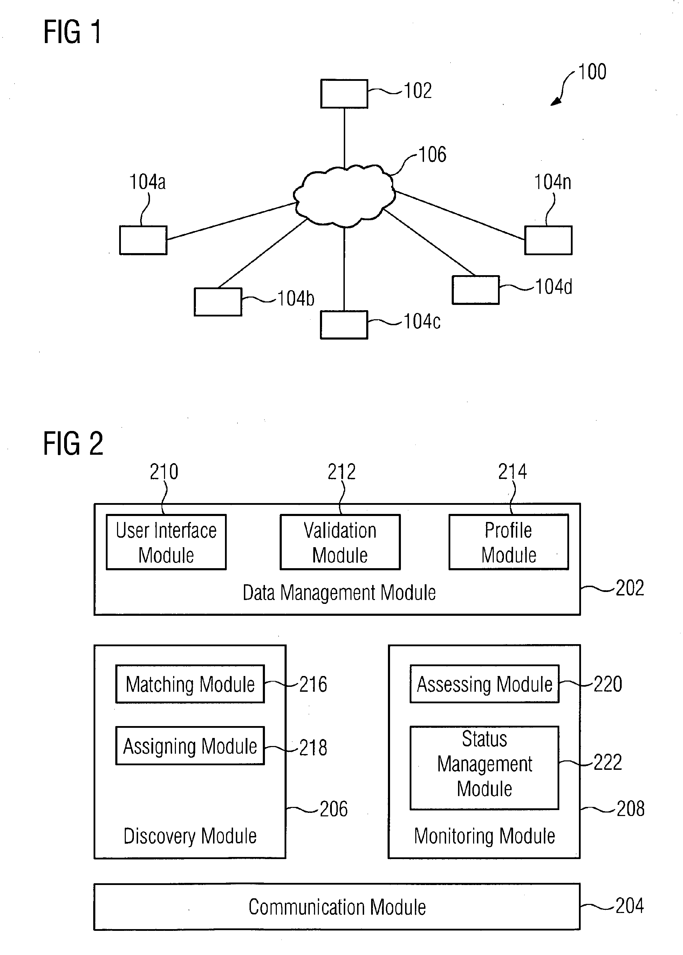

FIG 1 illustrates a schematic representation of a device network 100 in accordance with an embodiment of the present invention.

As shown in the adjoining figure, the device network 100 includes a managing device 102 and multiple managed devices 104a through 104n (hereinafter collectively referred to as managed devices 104 and individually referred to as managed device 104). The managing device 102 and the managed devices 104 are communicatively coupled to a communication network 106.

In one example, the managing device 102 is implemented as a dedicated computer workstation which realizes a network management system (as will be described later on in the present description). The managing device 102, through the management module, configures and monitors the managed devices 104. It should be noted that although the adjoining figure depicted only one managing device 102, multiple managing devices 102 may be implemented in a similar manner.

Various examples of the managed devices 104 include, but are not limited, switches, routers, microwave radios, printers, workstations, and so on. Each managed devices 104 has a set of device attributes such as device type, model, firmware details, number of ports, and so on. Further, each managed device 104 is configured to locally monitor and store operational and event data related to the managed devices 104.

In various exemplary embodiments of the present invention, the communication network 106 is based on any suitable network architecture including, but not limited to, Local Area Network (LAN), Metropolitan Area Network (MAN), and Wide Area Network (WAN).

In one example of the present invention, the communication network 106 is based on Simple Network Management Protocol (SNMP).

Simple Network Management Protocol (SNMP) is one of the most commonly used network management protocol in various device networks. SNMP defines syntax and semantics of messages exchanged between the management and the agent modules.

Management Information Base (MIB) specifies information that a network device such as the managed device 104 should maintain. All data referring to various managed features of the network device are referred to as objects, which are represented by MIB variables which can be queried or modified. MIB uses a hierarchical namespace such that each object is assigned a unique object identifier (OID). Each OID identifies an object that can be read or set via SNMP.

It should be noted that although the present invention will hereinafter be described primarily in the context of SNMP, various embodiments of the present invention described herein are not limited thereto and are applicable for any network management protocol with minor modifications as will be readily apparent to a person ordinarily skilled in the art.

Each managed device 104 maintains a virtual data store, referred to as a management information base (MIB), which stores all data related to various device attributes of the managed device 104 as individual objects, wherein each object is assigned a unique object identifier (OID).

The managing device 102 is capable of reading data values stored in individual objects and also, writing desired data values to individual objects stored in the managed devices 104.

The managing device 102 is configured to retrieve one or more assigned attribute values corresponding to one or more device attributes from each managed device 104. These assigned attribute values are used initially, for device discovery and subsequently, for device monitoring, as will now be described in detail in conjunction with the following figures.

Referring to FIG 2, a block diagram of a network management system 200 is illustrated in accordance with an embodiment of the present invention.

The network management system 200 includes a data management module 202, a communication module 204, a discovery module 206, and a monitoring module 208. The data management module 202 includes a user-interface module 210, a validation module 212, and a profile module 214. The discovery module 206 includes a matching module 216 and an assigning module 218. The monitoring module 208 includes an assessing module 220 and a status management module 222.

As explained in conjunction with the preceding figure, each managed device 104 includes a set of device attributes and corresponding assigned attribute values. As per techniques of the present invention, the managing device 102 maintains a list of expected attribute values and/or desired attribute values corresponding to one or more device attributes for the purpose of discovery and monitoring of the managed devices 104 respectively. The assigned attribute values are retrieved from the managed device 104 and compared with expected or desired attribute values and discovery or monitoring of the managed device 104 is performed accordingly.

The data management module 202 is configured for configuring at least one device management profile. Each device management profile includes a set of device discovery attributes. In an exemplary embodiment of the present invention, each device management profile shares a common set of device discovery attributes. Each device discovery attribute is assigned a priority value.

Each device management profile further includes at least one discovery criterion. Each discovery criterion includes at least one logical pair of one of the device discovery attributes and a corresponding expected attribute value.

In an exemplary embodiment of the present invention, at least one discovery criterion includes multiple logical pairs of the device discovery attributes and corresponding expected attribute values. The multiple such logical pairs are in turn logically combined to generate the discovery criterion. Thus, in various exemplary embodiments of the present invention, the discovery criterion may specify a condition related to only one device discovery attribute or on multiple device discovery attributes that are logically combined. In various embodiments of the present invention, while logical combining multiple logical pairs, various logical functions such as 'AND', 'OR', 'NOT', and so on may be used.

In an exemplary embodiment of the present invention, the expected attribute value is defined in a template-like manner such that a plurality of assigned attribute values is permitted to match therewith. The term 'template-like manner' is used to indicate that the expected attribute value is defined as a template or a pattern. This can be achieved using wildcards as is widely used in general in computer programs and in particular, in various search algorithms.

In an exemplary embodiment of the present invention, the data management module 202 is further configured for configuring the device management profile such that the device management profile includes a set of device monitoring attributes. In this embodiment, the device management profile further comprises one or more monitoring criterion. Each monitoring criterion includes at least one logical pair of one of the device monitoring attributes and a corresponding desired attribute value and/or a range thereof.

In an exemplary embodiment of the present invention, at least one monitoring criterion includes multiple logical pairs of the device monitoring attributes and corresponding desired attribute values. In this case, the logical pairs are logically combined to generate the monitoring criterion, in a similar manner as described with reference to the logical combination of the discovery criterion.

In an exemplary embodiment of the present invention, the set of device discovery attributes, the set of monitoring attributes, and the device management profile are configured based on a user input received through the user-interface module 210.

The user-interface module 210 is configured for providing at least one configuration user-interface. The configuration user-interface is configured for receiving one or more user inputs related to the device discovery attributes and corresponding expected attribute values. The configuration user-interface is further configured for receiving user inputs related to device monitoring attributes and corresponding desired attribute values. In addition, the user-interface module 210 enables configuring of the device management profile.

The data management module 202 includes the validation module 212. The user inputs received through the user-interface module 210 are provided to the validation module 212 for validation. The validation module 212 is configured for validating each device management profile such that a duplication of the discovery criterion in one or more device management profiles is identified.

The data management module 202 further includes the profile module 214. The profile module 214 is configured to store device management profiles therein. Other modules within the network management system 200 interface with the data management module 202 to retrieve the device management profiles stored in the profile module 214.

As stated earlier, the managing device 102 is configured to discover and monitor the managed devices 104. The operation of relevant modules during a discovery process will now be explained.

The communication module 206 is configured for retrieving one or more assigned attribute values corresponding to one or more of the device discovery attributes from at least one managed device 104. As soon as any new managed device 104 is added to the device network 100 and the managing device 102 detects presence thereof, the discovery process is initiated. As explained earlier, the data management module 202 stores the set of device discovery attributes that need to be retrieved from any managed device 104 during the discovery process. The communication module 204 receives information related to the device discovery attributes from the data management module 202 and accordingly, retrieves relevant assigned attribute values from the managed device 104. The assigned attribute values thus retrieved are provided to the discovery module 206.

As mentioned earlier, the discovery module 206 includes the matching module 216 and the assigning module 218.

The matching module 216 receives the assigned attribute values from the communication module 204. The matching module 216 is configured for determining a matching index corresponding to at least one of the device discovery attributes based on matching between the assigned attribute values retrieved from the managed device 104 and the expected attribute values in the discovery criterion.

The assigning module 214 is configured for assigning one of the device management profiles to the managed device 104 based on the priority values and/or the matching index corresponding to one or more of the device discovery attributes corresponding to the discovery criterion therein.

As will be appreciated, it is possible that multiple device management profiles are matched for a given set of assigned attribute values. In such case, the device management profile with a higher matching index is selected. In case two or more device management profiles provide a match with the same matching index, the device management profiles with higher matching index corresponding to device discovery attributes with higher priority is selected.

The discovery process in the network management system 200 will now be explained in more detail with the help of a few examples in the following description.

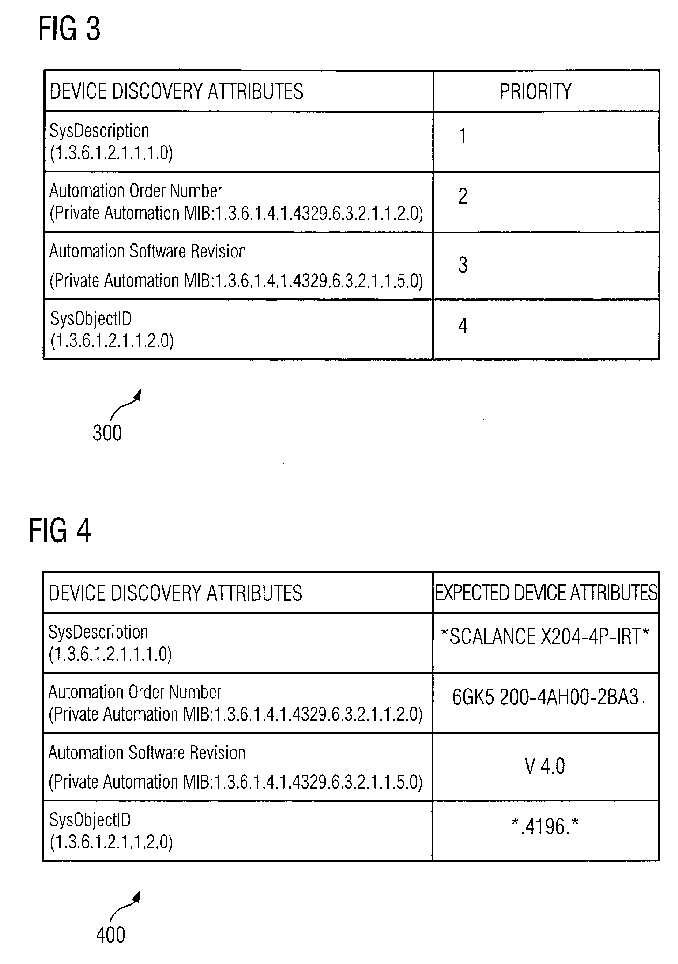

FIG 3 illustrates a set of device discovery attributes along with corresponding priority values in tabular format in accordance with an exemplary embodiment of the present invention. It should be noted that device discovery attributes are defined for the entire network management system 200 and is not particular to any specific managed device 104 or device management profile thereof.

FIG 4 illustrates a set of device discovery attributes along with corresponding expected attribute values in a tabular format in accordance with an exemplary embodiment of the present invention. It should be noted that expected attribute values corresponding to individual device discovery attributes are defined for a specific device type and as such, it is included within a specific device management profile.

The assigned attribute values retrieved during the discovery process are compared with expected attribute values stored in individual device management profiles for corresponding device discovery attributes. In various examples, it is possible that multiple device management profiles provide a match to a given set of assigned attribute values. In such cases, a unique device management profile is selected based on the matching index and/or the priority value of the device discovery attributes in the discovery criterion.

In one exemplary embodiment of the present invention, a discovery criterion with higher priority and higher matching index is selected.

The device management profile selection will be further understood with reference to the following examples:

### EXAMPLE 1

```
 DEVICE MANAGEMENT PROFILE 1
     {DISCOVERY CRITERION:
          sysDescr = "ScalanceX200"
     }
     DEVICE MANAGEMENT PROFILE 2
     {DISCOVERY CRITERION:
          automationSwRevision = "V 4.2.5" &&
          DCP_ID = "002A 0A01"
     }
```

### RESULT:

In case a given set of assigned attribute values is matched with both the DEVICE MANAGEMENT PROFILE 1 and DEVICE MANAGEMENT PROFILE 2, DEVICE MANAGEMENT PROFILE 1 will be selected as best match because sysDescr (priority value = 1) has higher priority in comparision to automationSwRevision (priority value = 3) and DCP_ID (priority value = 6).

It should be noted that DEVICE MANAGEMENT PROFILE 2 logically combines multiple logical pairs of device discovery attribute and corresponding expected attribute value using a logical 'AND' operator.

### EXAMPLE 2

```
 DEVICE MANAGEMENT PROFILE 3
     {DISCOVERY CRITERION
          sysDescr = "ScalanceX200" &&
          automationSwRevision = "V 4.2.5"
     }
     DEVICE MANAGEMENT PROFILE 4
     {DISCOVERY CRITERION
          sysDescr = "ScalanceX200"
     }
```

### RESULT:

In case a given set of assigned attribute values is matched with both the DEVICE MANAGEMENT PROFILE 3 and DEVICE MANAGEMENT PROFILE 4, DEVICE MANAGEMENT PROFILE 3 will be selected as best match; since more criterion are matched in DEVICE MANAGEMENT PROFILE 3.

### EXAMPLE 3

```
 DEVICE MANAGEMENT PROFILE 5
     {DISCOVERY CRITERION
          sysDescr = "ScalanceX2*" &&
          automationSwRevision = "V 4.2.5"
     }
     DEVICE MANAGEMENT PROFILE 6
     {DISCOVERY CRITERION
          sysDescr = "ScalanceX204"
     }
```

### RESULT:

In case a given set of assigned attribute values is matched with both the DEVICE MANAGEMENT PROFILE 5 and DEVICE MANAGEMENT PROFILE 6, DEVICE MANAGEMENT PROFILE 5 will be selected as the best match with higher matching index because more criterion have matched in DEVICE MANAGEMENT PROFILE 3 with higher priority even though the DEVICE MANAGEMENT PROFILE 6 offers a more exact match.

In accordance with various embodiments of the present invention, when two device management profiles provide a match for a given set of assigned attribute value and the priorities of the entire criteria match, and number of logical pairs are also same, there will at least be one logical pair in which the expected attribute value is defined in a template-like manner. In such cases, the device management profile with the higher matching index of the higher priority corresponding to the device discovery attribute therein will be selected. This is illustrated through the following example:

### EXAMPLE 4

```
 DEVICE MANAGEMENT PROFILE 7
     {DISCOVERY CRITERION
          sysDescr = "X4*" &&
          automationSwRevision ="1.0"
     }
     DEVICE MANAGEMENT PROFILE 8
     {DISCOVERY CRITERION
          sysDescr = "ScalanceX204"
     }
```

### RESULT:

In case a given set of assigned attribute values is matched with both the DEVICE MANAGEMENT PROFILE 7 and DEVICE MANAGEMENT PROFILE 8, DEVICE MANAGEMENT PROFILE 8 will provide a higher matching index because more characters in the template-like definition of the expected attribute value are matched.

### EXAMPLE 5

```
 DEVICE MANAGEMENT PROFILE 9
     {DISCOVERY CRITERION
          sysDescr = "X4*" &&
          automationSwRevision ="1.0.3*"
     }
     DEVICE MANAGEMENT PROFILE 10
     {DISCOVERY CRITERION
          sysDescr ="X408* &&
          automationSwRevision ="1*"
     }
```

### RESULT:

In case a given set of assigned attribute values is matched with both the DEVICE MANAGEMENT PROFILE 9 and DEVICE MANAGEMENT PROFILE 10, DEVICE MANAGEMENT PROFILE 10 will be matched as per this policy as the sysDescr device discovery attributes which has the higher priority has the longer match.

As will now be understood in light of the above examples, as per various embodiments of the present invention, during the discovery process, the assigned attribute values are matched with the expected attribute values; the discovery criterion with at least a partial match with a device discovery attributes with higher priority is selected. In case, the priority value is same, the decision criterion corresponding to a higher matching index is selected. In case the matching index and priority value of at least one device discovery attributes is same, the discovery criterion with more matching device discovery attributes is selected, and so on.

The term 'matching index', as used herein, is intended to refer to extent of matching between the assigned attribute values and the expected attribute values. Any suitable scale can be devised. For example, a scale starting from 0 and moving in positive integers up to 100 may be used. Wherein, 0 represents no match while 100 represents complete match. An intermediate value represents a partial match with a higher value of the matching index indicating a better match.

In various embodiments of the present invention, in case a managed device 104 is not successfully matched with any device management profile stored in the data management module 202, the managed device 104 is assigned a default device management profile.

Referring back to FIG 2, as stated earlier, the network management system 200 is also configured for monitoring the managed devices 104 in the device network 100. The operation of the network management system 200 during a monitoring process will now be explained.

The communication module 204 is also configured for retrieving one or more of the assigned attribute values corresponding to the device monitoring attributes from individual managed devices 104. During the monitoring process, the communication module 204 receives information related to device monitoring attributes from the data management module 202 for all active managed devices 104 in the device network 100. The communication module 204 accordingly retrieves the assigned attribute values corresponding to the device monitoring attributes from the managed devices 104. The assigned attribute values, thus retrieved, are provided to the monitoring module 208.

The monitoring module 208 includes the assessing module 220 and the status management module 222.

The assessing module 220 receives information related to the assigned attribute values corresponding to one or more device monitoring attributes. The assessing module 220 is configured for comparing the assigned attribute values with the desired attribute value and/or the range thereof for the relevant device monitoring attributes. The assessing module 220 provides the result of such comparison to the status management module 222.

The status management module 222 is configured for assigning a predefined device status to the managed devices 104 based on the comparison between the assigned attribute values from the desired attribute value and/or the range thereof. In addition, the status management module 222 is also configured to trigger an alarm in the managing device 102 in case the assigned attribute values deviate from a desired attribute value in a predefined manner.

In an exemplary embodiment of the present invention, the network management system 200 is implemented in the device network 100 based on Simple Network Management Protocol (SNMP) such that each of the device discovery attributes and/or the device monitoring attributes correspond to an individual object identifier stored in the managed devices 104. However, as mentioned earlier, the network management system 200 of the present invention may be used in any device network 100 independent of the actual network management protocol used therein.

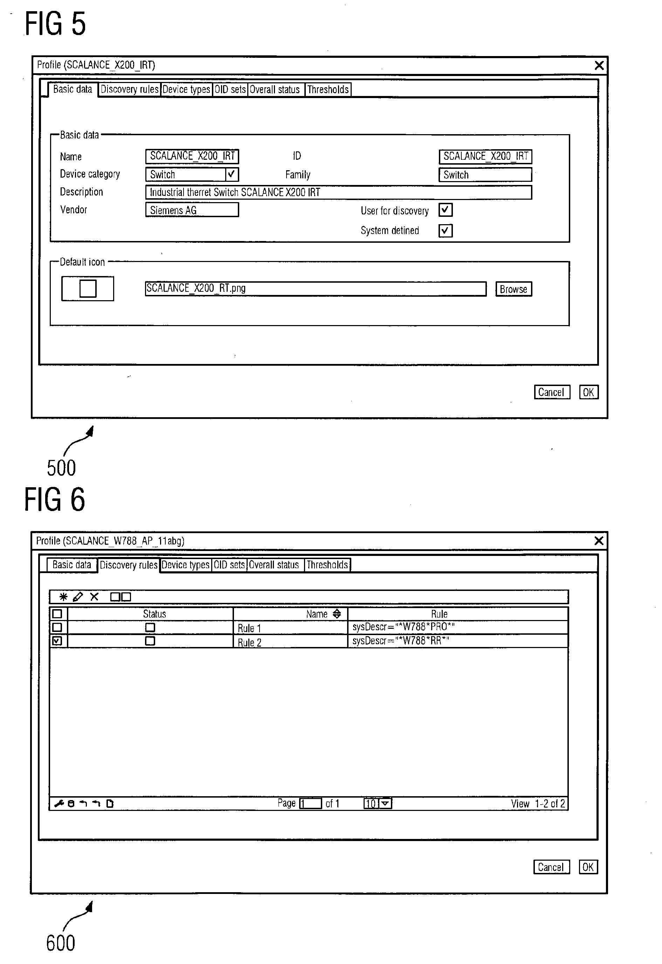

Referring now to FIGS 5 through 11, various configuration user-interfaces for configuring a device management profile are shown.

An exemplary configuration user-interface 500 for configuring basic device description is illustrated in FIG 5.

An exemplary configuration user-interface 600 for configuring discovery criterion for discovering managed devices 104 in the device network 100 is shown in FIG 6.

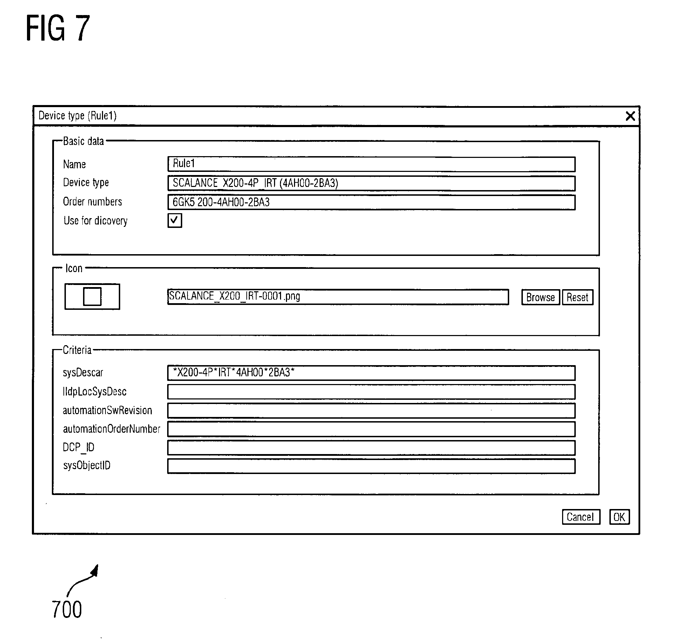

When a new discovery criterion is to be created, the user of the network management system 200 is directed to an exemplary configuration user-interface 700 as depicted in FIG 7. As can be seen in the exemplary configuration user-interface 700, the user is enabled to input expected attribute values corresponding to the set of device discovery attributes such as "sysDescr" and so on.

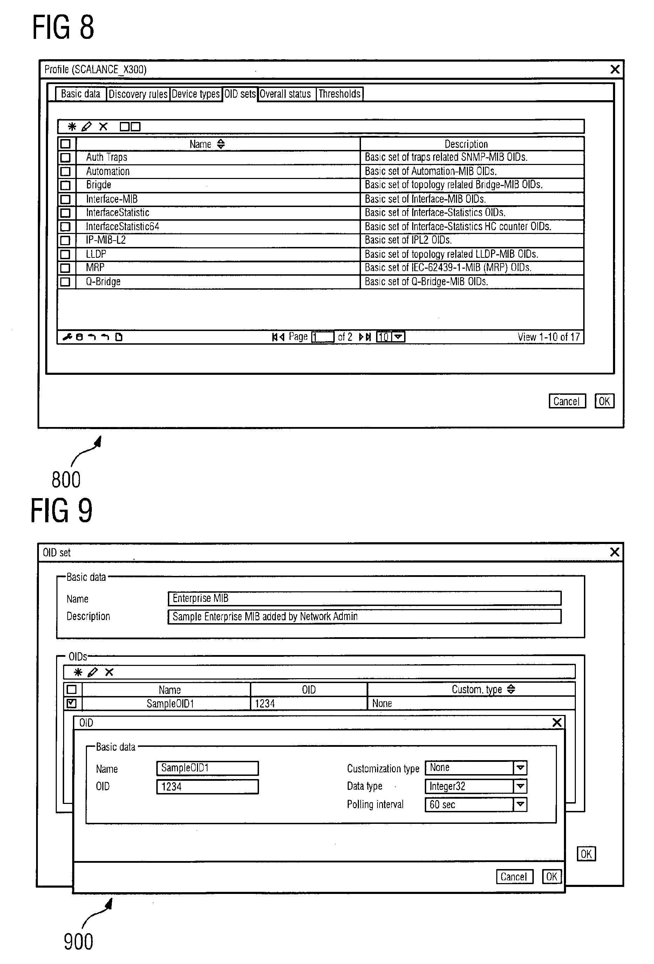

FIG 8 illustrates an exemplary configuration user-interface 800 corresponding to configuring a set of device monitoring attributes. A user of the network management system 200 is enabled to add/delete any set of device monitoring attributes through this interface.

It should be noted that in case of managed devices 104 from different vendors, for compliance with standard specifications, each vendor necessarily implements standard MIBs (as per RFC 1213 titled, *"*Management Information Base for Network Management of TCP/IP-based internets: MIB-II" published by Internet Engineering Task Force). However, in addition to the standard MIBs, many vendors support private MIBs (also referred to as 'Enterprise MIBs') to realize certain features. For example, SIEMENS implements HSR (High Speed Redundancy) protocol and this can be readable using HSR private MIBs. Similarly other device vendors will have their own private MIBs. As per techniques of the present invention, such private MIBs are advantageously available to a user of network management system 200 for monitoring. The user may select any desired device monitoring attributes available in an individual managed device 104 independent of whether it belongs to standard or private MIB within the managed device 104.

FIG 9 illustrates an exemplary configuration user-interface 900 for adding a new device monitoring attributes in the network management system 200. As can be seen from the adjoining figure, the user is enabled to select device monitoring attributes related to a private MIB therein.

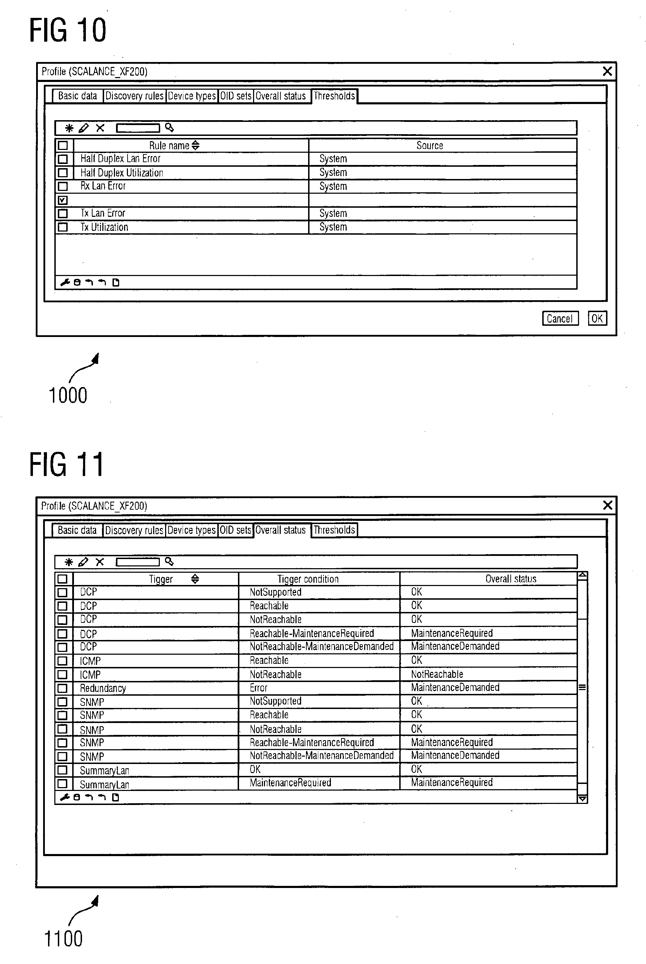

FIG 10 illustrates an exemplary configuration user-interface 1000 for configuring desired attribute values in the network management system 200.

As stated earlier, the network management system 200 is configured for monitoring desired device monitoring attributes and/or triggering an alarm condition based on assigned attribute value deviating from the desired attribute values corresponding to one or more device monitoring attributes.

In accordance with further advantageous aspect of the present invention, the user is provided great flexibility in configuring the desired attribute values or a range thereof.

FIG 11 illustrates an exemplary configuration user-interface 1100 for configuring desired attribute values in the network management system 200.

As described earlier in the present description, the network management system 200 of the present invention is configured to manage status of the managed devices 104 in the device network 100 depending on desired attribute values corresponding to the device monitoring attributes device. In addition, the network management system 200 is also configured to set a managed device 104 to a predefined status depending on a response there from such as, SNMP Reachable / Not Reachable, ICMP Reachable / Not Reachable, Fault etc.

The techniques of the present invention advantageously enable a user of the network management system 200 to configure a predefined criterion for device status management in a desired manner. The configuration user-interface 1100 provides an exemplary user interface for achieving the same.

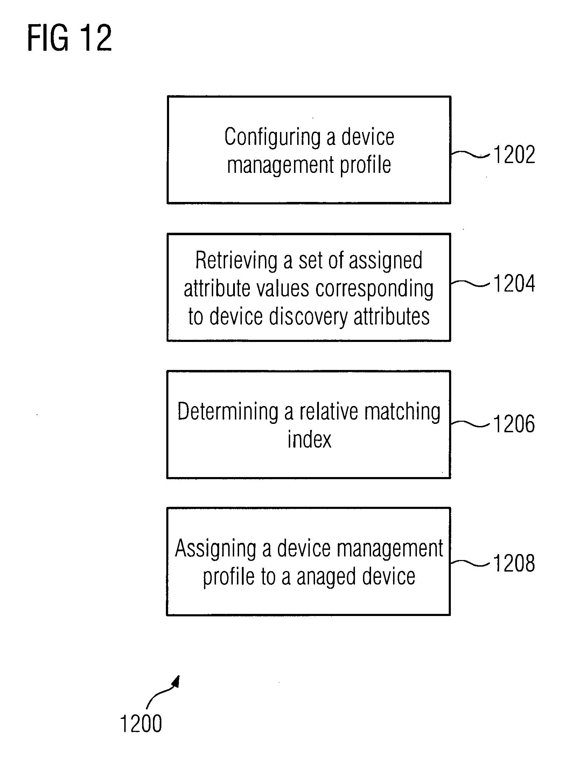

Referring now to FIG 12, a flow chart for a method for discovering a managed device in a device network is illustrated in accordance with an embodiment of the present invention.

At step 1202, at least one device management profile is configured. Each device management profile includes a set of device discovery attributes. Each of the device discovery attributes is assigned a priority value. Further, each device management profile includes at least one discovery criterion. The discovery criterion includes at least one logical pair of one of the device discovery attributes and a corresponding expected attribute value.

In accordance with an exemplary embodiment of the present invention, during this step, at least one configuration user-interface is provided to a user of the network management system. The configuration user-interface is configured for receiving one or more user inputs for configuring said set of device discovery attributes and said device management profile.

In accordance with an aspect of the present invention, at least one discovery criterion includes multiple logical pairs of said device discovery attributes and corresponding expected attribute values. The logical pairs are logically combined to generate the discovery criterion.

In accordance with another aspect of the present invention, the expected attribute value is defined in a template-like manner such that multiple assigned attribute values are permitted to match therewith.

In an exemplary embodiment of the present invention, while configuring the device management profile, each device management profile is validated such that a duplication of the discovery criterion in one or more device management profiles is identified. The user of the network management system may accordingly be notified such that duplication of the discovery criterion across different device management profiles is avoided.

At step 1204, one or more assigned attribute values corresponding to one or more of the device discovery attributes are retrieved from at least one managed device.

At step 1206, a matching index corresponding to at least one of the device discovery attributes is determined based on matching between one or more of the assigned attribute values retrieved from the at least one managed device and the expected attribute values in the discovery criterion.

At step 1208, one of the device management profiles is assigned to the at least one managed device based on the matching index and the priority values corresponding to one or more the device discovery attributes corresponding to the discovery criterion therein.

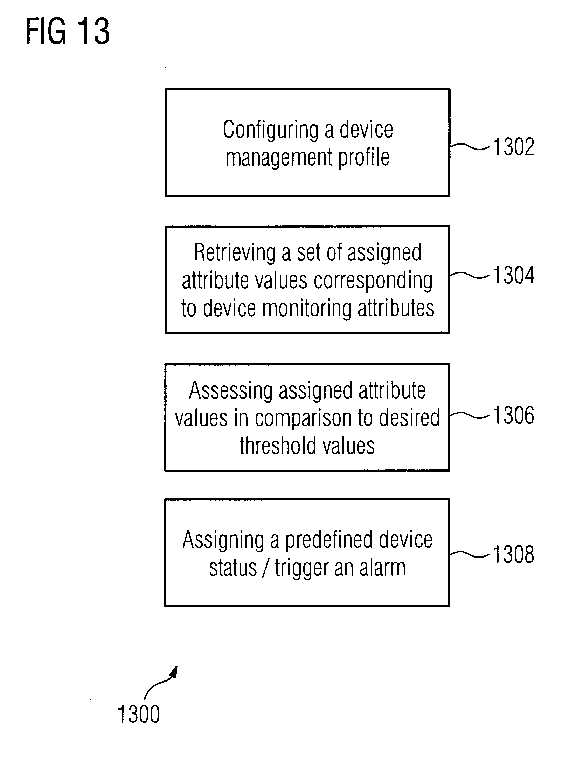

Referring now to FIG 13, a flow chart for a method for monitoring a managed device a device network is illustrated in accordance with an embodiment of the present invention.

At step 1302, a device management profile is configured to include a set of device monitoring attributes. Further, the device management profile is configured to include one or more monitoring criterion therein. Each monitoring criterion includes at least one logical pair of one of the device monitoring attributes and a corresponding desired attribute value and/or a range thereof.

In accordance with an exemplary embodiment of the present invention, at least one monitoring criterion includes a plurality of the logical pairs of the device monitoring attributes and corresponding desired attribute values. The logical pairs are logically combined to generate the monitoring criterion.

At step 1304, one or more of the assigned attribute values corresponding to said device monitoring attributes are retrieved from individual managed devices.

At step 1306, the assigned attribute values are compared with the expected attribute value and/or the range thereof.

At step 1308, a predefined device status is assigned to at least one of the managed devices and/or an alarm is triggered in said managing device based on the comparison between the assigned attribute values from the desired attribute value and/or the range thereof.

In various exemplary embodiments of the present invention, the device network is managed based on Simple Network Management Protocol (SNMP) such that each of the device discovery attributes correspond to an individual object identifier stored in the managed devices. However, as pointed out earlier, various techniques of the present invention are not limited to any particular network management protocol and any suitable network protocol may be used.

As will be evident from the foregoing description, the present invention provides a system and a method for effectively managing one or more managed devices in a device network. The system and method of the present invention are particularly advantageous in managing a heterogeneous network including a mix of multiple device types from diverse vendors.

According to techniques of the present invention, the network management system is configurable with respect to discovery and monitoring related behaviour thereof.

A user of the network management system of the present invention is enabled to define discovery-related device attributes and related processing logic. The user is therefore relieved from dependence on receiving upgrades from a vendor of the network management system in order to accurately discover various network devices. Furthermore, the user is advantageously enabled to customize various monitoring-related device attributes and corresponding thresholds and alerts. Further, the user is enabled to define device status based on various monitoring-related parameters as desired. Thus, the network management system and method according to the present invention is highly customizable as per specific requirements in individual device network implementations.

The network management system according to the present invention is extensible and future-ready to configure any desired device discovery attributes and device monitoring attributes as required.

The techniques of the present invention advantageously obviate the need for a vendor to develop and distribute hot-fixes at various installed locations of a network management system thereof.

Further, using techniques of the present invention, it is possible to discover and monitor devices not only using standard MIBs but also private MIBs in an SNMP network.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for managing a device network (100), said device network (100) comprising a plurality of managed devices (104) and at least one managing device (102), said method comprising:
- configuring (1202) at least one device management profile, wherein each device management profile comprises a set of device discovery attributes, each of said device discovery attributes being assigned a priority value, and wherein each device management profile further comprises at least one discovery criterion, said discovery criterion comprising at least one logical pair of one of said device discovery attributes and a corresponding expected attribute value,
- retrieving (1204) one or more assigned attribute values corresponding to one or more of said device discovery attributes from at least one managed device (104), and
- determining (1206) a matching index corresponding to at least one of said device discovery attributes based on matching between one or more of said assigned attribute values retrieved from said at least one managed device (104) and said expected attribute values in said discovery criterion, and
- assigning (1208) one of said device management profiles to said at least one managed device (104) based on said priority values and/or said matching index corresponding to one or more of said device discovery attributes corresponding to said discovery criterion therein.

2. The method according to claim 1 further comprising providing (1202) at least one configuration user-interface, said configuration user-interface configured for receiving one or more user inputs for configuring said device management profile.

3. The method according to any of the preceding claims further comprising validating (1202) each device management profile such that a duplication of said discovery criterion in one or more device management profiles is identified.

4. The method according to any of the preceding claims, wherein at least one discovery criterion comprises a plurality of said logical pairs of said device discovery attributes and corresponding expected attribute values, said logical pairs being logically combined to generate said discovery criterion.

5. The method according to any of the preceding claims, wherein said expected attribute value is defined in a template-like manner such that a plurality of assigned attribute values is permitted to match therewith.

6. The method according to any of the preceding claims further comprising configuring (1302) said device management profile such that said device management profile comprises a set of device monitoring attributes, and further such that said device management profile further comprises one or more monitoring criterion, at least one of said monitoring criterion comprising at least one logical pair of one of said device monitoring attributes and a corresponding desired attribute value and/or a range thereof.

7. The method according to claim 6, wherein at least one monitoring criterion comprises a plurality of said logical pairs of said device monitoring attributes and corresponding desired attribute values, said logical pairs being logically combined to generate said monitoring criterion.

8. The method according to any of claims 6 or 7 further comprising retrieving (1304) one or more of said assigned attribute values corresponding to said device monitoring attributes from individual managed devices (104).

9. The method according to any of claims 6 to 8 further comprising:
- comparing (1306) said assigned attribute values with said desired attribute value and/or said range thereof, and
- assigning (1308) a predefined device status to at least one of said managed devices (104) and/or triggering an alarm in said managing device (102) based on said comparison between said assigned attribute values from said desired attribute value and/or said range thereof.

10. The method according to any of the preceding claims, wherein said device network (100) is managed based on Simple Network Management Protocol (SNMP) such that each of said device discovery attributes and/or said device monitoring attributes correspond to an individual object identifier stored in said managed devices (104).

11. A network management system (200) for managing a device network (100), said device network (100) comprising a plurality of managed devices (104) and at least one managing device (102), said network management system (200) comprising:
- an data management module (202), said data management module (202) configured for configuring at least one device management profile, wherein each device management profile comprises a set of device discovery attributes, each of said device discovery attributes being assigned a priority value, and wherein each device management profile further comprises at least one discovery criterion, said discovery criterion comprising at least one logical pair of one of said device discovery attributes and a corresponding expected attribute value,
- a communication module (204), said communication module (204) configured for retrieving one or more assigned attribute values corresponding to one or more of said device discovery attributes from at least one managed device (104), and
- a discovery module (206), said discovery module (206) comprising:
a matching module (216), said matching module (216) configured for determining a matching index corresponding to at least one of said device discovery attributes based on matching between one or more of said assigned attribute values retrieved from said at least one managed device (104) and said expected attribute values in said discovery criterion, and
an assigning module (218), said assigning module (218) configured for assigning one of said device management profiles to said at least one managed device (104) based on said priority values and/or said matching index corresponding to one or more of said device discovery attributes corresponding to said discovery criterion therein.

12. The network management system (200) according to claim 11 further comprising a user-interface module (210) configured for providing at least one configuration user-interface, said configuration user-interface configured for receiving one or more user inputs for configuring said device management profile.

13. The network management system (200) according to any of the preceding claims further comprising a validation module (212), said validation module (212) configured for validating each device management profile such that a duplication of said discovery criterion in one or more device management profiles is identified.

14. The network management system (200) according to any of the preceding claims, wherein at least one discovery criterion comprises a plurality of said logical pairs of said device discovery attributes and corresponding expected attribute values, said logical pairs being logically combined to generate said discovery criterion.

15. The network management system (200) according to any of the preceding claims, wherein said expected attribute value is defined in a template-like manner such that a plurality of assigned attribute values is permitted to match therewith.

16. The network management system (200) according to any of the preceding claims wherein said data management module (202) is further configured for configuring said device management profile such that said device management profile comprises a set of device monitoring attributes, and further such that said device management profile further comprises one or more monitoring criterion, at least one of said monitoring criterion comprising at least one logical pair of one of said device monitoring attributes and a corresponding desired attribute value and/or a range thereof.

17. The network management system (200) according to claim 16, wherein at least one monitoring criterion comprises a plurality of said logical pairs of said device monitoring attributes and corresponding desired attribute values, said logical pairs being logically combined to generate said monitoring criterion.

18. The network management system (200) according to any of claims 16 or 17, wherein said communication module (204) is further configured for retrieving one or more of said assigned attribute values corresponding to said device monitoring attributes from individual managed devices (104).

19. The network management system (200) according to any of claims 16 to 18 further comprising a monitoring module (208), said monitoring module (208) comprising:
- an assessing module (220), said assessing module (220) configured for comparing said assigned attribute values with said desired attribute value and/or said range thereof, and
- a status management module (222), said status management module (222) configured for assigning a predefined device status to at least one of said managed devices (104) and/or triggering an alarm in said managing device (102) based on said comparison between said assigned attribute values from said desired attribute value and/or said range thereof.

20. The network management system (200) according to any of the preceding claims, wherein said device network (100) is managed based on Simple Network Management Protocol (SNMP) such that each of said device discovery attributes and/or said device monitoring attributes correspond to an individual object identifier stored in said managed devices (104).
